(19) Europäisches Patentamt
European Patent Office
Office européen des brevets

(11) EP 4 368 659 A1

(12) **EUROPEAN PATENT APPLICATION**
published in accordance with Art. 153(4) EPC

(43) Date of publication:
**15.05.2024 Bulletin 2024/20**

(21) Application number: **22837911.1**

(22) Date of filing: **04.07.2022**

(51) International Patent Classification (IPC):
***C08G 77/04*** *(2006.01)* ***C08G 77/00*** *(2006.01)*
***C08G 77/448*** *(2006.01)* ***C08G 64/18*** *(2006.01)*

(52) Cooperative Patent Classification (CPC):
**C08G 64/18; C08G 77/00; C08G 77/04; C08G 77/448**

(86) International application number:
**PCT/KR2022/009597**

(87) International publication number:
**WO 2023/282559 (12.01.2023 Gazette 2023/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **05.07.2021 KR 20210088119**

(71) Applicant: **Samyang Corporation**
**Jongno-gu**
**Seoul 03129 (KR)**

(72) Inventors:
- **HEO, Seong Hyen**
  **Balgeuntteul-ro Sejong 30062 (KR)**
- **KIM, Mi Ran**
  **Daejeon 34050 (KR)**
- **SHIN, Kyung Moo**
  **Seoul 06006 (KR)**
- **CHANG, Yun Ju**
  **Daejeon 34020 (KR)**
- **JUNG, Seung Pil**
  **Gwangju-si Gyeonggi-do 12788 (KR)**
- **CHOI, Jin Sik**
  **Daejeon 34061 (KR)**
- **KIM, Yu Il**
  **Hwaseong-si Gyeonggi-do 18237 (KR)**
- **KIM, Jong Yoon**
  **Siheung-si Gyeonggi-do 15010 (KR)**
- **SEO, Seong Woo**
  **Ansan-si Gyeonggi-do 15596 (KR)**

(74) Representative: **Wohlfahrt, Jan Günther et al**
**Gleiss Große Schrell und Partner mbB**
**Patentanwälte Rechtsanwälte**
**Leitzstraße 45**
**70469 Stuttgart (DE)**

(54) **HYDROXYPHENYL-TERMINATED POLYSILOXANE, POLYSILOXANE-POLYCARBONATE COPOLYMER HAVING EXCELLENT TRANSPARENCY AND IMPROVED FLAME RETARDANCY AND COMPRISING SAME AS REPEATING UNIT, AND METHOD FOR PREPARING SAME COPOLYMER**

(57) The present invention relates to a hydroxylphenyl-terminated polysiloxane, a polysiloxane-polycarbonate copolymer comprising the same as repeating unit, and a method for preparing the copolymer, and more specifically, a polysiloxane of a specific structure having terminal silane unit comprising optionally substituted hydroxylphenyl group, and a polysiloxane-polycarbonate copolymer which comprises the polysiloxane and a polycarbonate block as repeating units, and thereby shows the same or more excellent transparency and significantly further improved flame retardancy as compared with the level of conventional polysiloxane-polycarbonate copolymer, and a method for preparing the same.

EP 4 368 659 A1

## Description

[TECHNICAL FIELD]

The present invention relates to a hydroxylphenyl-terminated polysiloxane, a polysiloxane-polycarbonate copolymer comprising the same as repeating unit, and a method for preparing the copolymer, and more specifically, a polysiloxane of a specific structure having terminal silane unit comprising optionally substituted hydroxylphenyl group, and a polysiloxane-polycarbonate copolymer which comprises the polysiloxane and a polycarbonate block as repeating units, and thereby shows the same or more excellent transparency and significantly further improved flame retardancy as compared with the level of conventional polysiloxane-polycarbonate copolymer, and a method for preparing the same.

[BACKGROUND ART]

Polycarbonate resin has good heat resistance, mechanical properties (in particular, impact strength) and transparency, and thus it has been extensively used as electric components, mechanical components and industrial resin. In the electric/electronic fields, in particular, when polycarbonate resin is used for TV housing, computer monitor housing, copier, printer, notebook battery, lithium battery case material, etc., releasing considerable heat, good flame retardancy is required as well as heat resistance and mechanical properties.

The conventional way to impart flame retardancy to a polycarbonate resin is to mix polycarbonate resin and halogenated flame retardant including brominated or chlorinated compound. Halogenated flame retardants exhibit sufficient flame-retarding performance in case of fire, but hydrogen halide gas is generated during resin processing, which can, not only cause cast erosion and environmental issues but also produce dioxin which is toxic and harmful to humans when it burns. Accordingly, a move to regulate use thereof has been extended. In order to cope with such regulation, flame-retardant polycarbonate resin compositions comprising both alkali metal salt as a non-halogenated flame retardant and fluorinated polyolefin resin as an anti-dripping agent have been developed. However, use of fluorinated ethylene-based resin and metal salt flame retardant to ensure flame retardancy of polycarbonate resin leads to degraded transparency which is one of the advantages of polycarbonate resin.

In order to overcome such degradation of transparency, alloying with silicone-based additives and silicone-based copolymer has been proposed. However, despite the environmental advantages of non-halogenated flame retardant, the technique using silicone-based additives has disadvantages such as still poor optical transparency, relatively high price and limitation on coloring when used as an exterior material. In addition, poor flowability makes it difficult to apply to produce a large article by injection molding.

Thus, in order to improve flame retardancy without lowering transparency, it has been suggested to incorporate siloxane units having one or two hydroxylphenyl side chains into the middle of the polymer chain of polysiloxane-polycarbonate copolymer (Korean Patent No. 1 0-1841684). However, the polysiloxane-polycarbonate copolymer disclosed in this patent needs to be further improved in terms of the balance between transparency and flame retardancy, particularly in terms of flame retardancy.

Accordingly, it is required to develop a polysiloxane-polycarbonate copolymer showing the same or more excellent transparency and significantly further improved flame retardancy, as compared with the level of conventional polysiloxane-polycarbonate copolymer.

[CONTENTS OF THE INVENTION]

[PROBLEMS TO BE SOLVED]

The present invention is intended to resolve the above-stated problems of the prior art, and thus the purpose of the present invention is to provide a polysiloxane capable of providing a polysiloxane-polycarbonate copolymer showing the same or more excellent transparency and significantly further improved flame retardancy, as compared with the level of conventional polysiloxane-polycarbonate copolymer, and further showing good properties such as flowability and impact strength at low temperature, etc., and a polysiloxane-polycarbonate copolymer comprising the same as repeating unit and a method of preparation thereof.

[TECHNICAL MEANS]

In order to achieve the above purpose, the present invention provides a hydroxylphenyl-terminated polysiloxane represented by the following chemical formula 1-1 or the following chemical formula 1-2:

[Chemical formula 1-1]

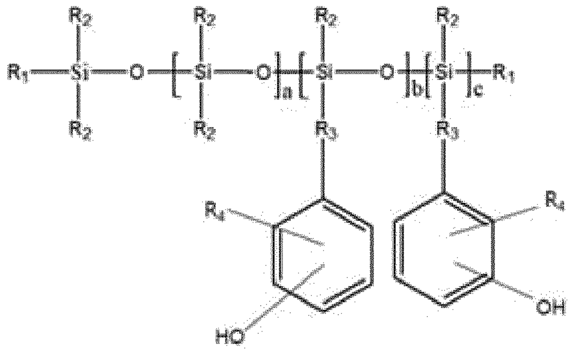

[Chemical formula 1-2]

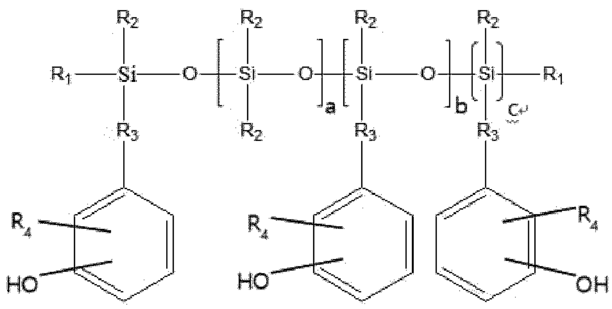

wherein: in the above chemical formulas 1-1 and 1-2,

each $R_1$ independently represents hydrogen atom, a hydrocarbon group having 1 to 13 carbon atoms or hydroxy group;

each $R_2$ independently represents a hydrocarbon group having 1 to 13 carbon atoms or hydroxy group;

each $R_3$ independently represents an alkylene group having 2 to 8 carbon atoms;

each $R_4$ independently represents hydrogen atom, halogen atom, hydroxy group, an alkyl group having 1 to 20 carbon atoms, an alkoxy group having 1 to 20 carbon atoms, or an aryl group having 6 to 10 carbon atoms;

each of a and b independently represents an integer of 0 to 10, provided that at least one of a and b is not 0; and c represents an integer of 1 to 2.

The other aspect of the present invention provides a polysiloxane-polycarbonate copolymer comprising, as repeating units, a hydroxylphenyl-terminated polysiloxane represented by the above chemical formula 1-1 or the above chemical formula 1-2; and a polycarbonate block.

Another aspect of the present invention provides a method for preparing a polysiloxane-polycarbonate copolymer, comprising the steps of: reacting a hydroxylphenyl-terminated polysiloxane represented by the above chemical formula 1-1 or the above chemical formula 1-2 and an oligomeric polycarbonate under an interfacial reaction condition to form a polysiloxane-polycarbonate intermediate; and polymerizing the polysiloxane-polycarbonate intermediate by using a first polymerization catalyst.

Still another aspect of the present invention provides a molded article comprising the polysiloxane-polycarbonate copolymer.

[EFFECT OF THE INVENTION]

The polysiloxane-polycarbonate copolymer according to the present invention can secure good flame retardancy even without addition of flame-retarding agent while soundly maintaining good inherent properties of polycarbonate such as impact resistance (in particular, impact strength at low temperature) and transparency, etc., and particularly shows the same or more excellent transparency and significantly further improved flame retardancy as compared with the level of conventional polysiloxane-polycarbonate copolymer, and thus it can be applied in various uses such as construction materials, automotive parts and electric/electronic parts, etc.

[CONCRETE MODE FOR CARRYING OUT THE INVENTION]

The present invention is explained in more detail below.

The term "reaction product" as used herein means a substance that is formed by reacting two or more reactants.

In addition, although the terms "first," "second" and the like are used herein for the description of polymerization catalysts, the polymerization catalysts are not limited by these terms. These terms are just used to distinguish the polymerization catalysts from each other. For example, a first polymerization catalyst and a second polymerization catalyst may be of the same kind of catalyst or different kinds of catalyst.

Furthermore, in the chemical formulas described herein, although the English character "R" used for representing hydrogen, halogen atom and/or hydrocarbon group, etc. has a numerical subscript, "R" is not limited by such a subscript. "R" represents, independently from each other, hydrogen, halogen atom and/or hydrocarbon group, etc. For example, regardless of whether two or more "R"s have the same numerical subscript or different numerical subscripts, such "R"s may represent the same hydrocarbon group or different hydrocarbon groups.

**Polysiloxane**

The hydroxylphenyl-terminated polysiloxane according to the present invention is a compound comprising silane unit having hydroxylphenyl group at the end and siloxanes optionally comprising hydroxylphenyl group in the middle of the chain, and it may be represented by the following chemical formula 1-1 or the following chemical formula 1-2:

[Chemical formula 1-1]

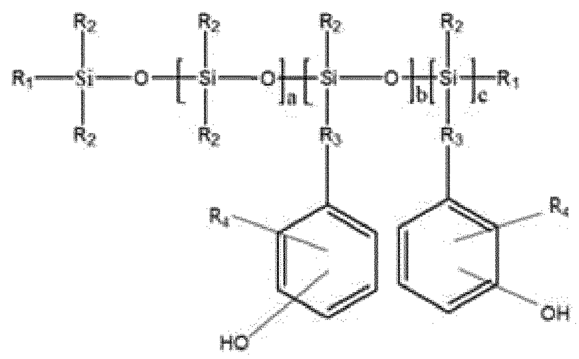

[Chemical formula 1-2]

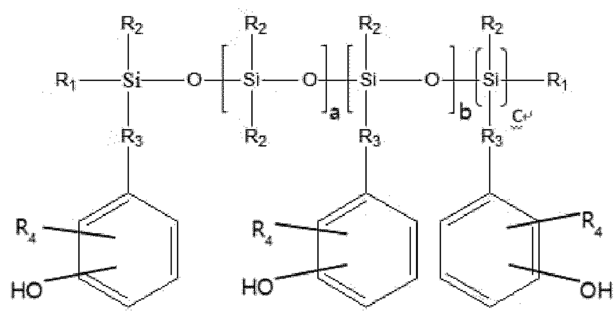

wherein: in the above chemical formulas 1-1 and 1-2,

each $R_1$ independently represents hydrogen atom, a hydrocarbon group having 1 to 13 carbon atoms or hydroxy group;

each $R_2$ independently represents a hydrocarbon group having 1 to 13 carbon atoms or hydroxy group;

each $R_3$ independently represents an alkylene group having 2 to 8 carbon atoms;

each $R_4$ independently represents hydrogen atom, halogen atom, hydroxy group, an alkyl group having 1 to 20 carbon atoms, an alkoxy group having 1 to 20 carbon atoms, or an aryl group having 6 to 10 carbon atoms;

each of a and b independently represents an integer of 0 to 10, provided that at least one of a and b is not 0; and

c represents an integer of 1 to 2.

More concretely, the hydrocarbon group having 1 to 13 carbon atoms may be alkyl group or alkoxy group having 1 to 13 carbon atoms, alkenyl group or alkenyloxy group having 2 to 13 carbon atoms, cycloalkyl group or cycloalkoxy group having 3 to 6 carbon atoms, aryloxy group having 6 to 10 carbon atoms, aralkyl group or aralkoxy group having 7 to 13 carbon atoms, or alkaryl group or alkaryloxy group having 7 to 13 carbon atoms.

For example, the alkyl group may be methyl, ethyl or propyl; the alkylene group may be ethylene or propylene; the halogen atom may be Cl or Br; the alkoxy group may be methoxy, ethoxy or propoxy; and the aryl group may be phenyl, chlorophenyl or tolyl (preferably, phenyl).

In the above chemical formulas 1-1 and 1-2, "a" can represent more concretely an integer of 0 to 8, still more concretely an integer of 1 to 8, and still more concretely an integer of 1 to 7, and "b" can represent more concretely an integer of 1 to 10, still more concretely an integer of 1 to 5, and still more concretely an integer of 1 to 3, provided that at least one of a and b is not 0.

In an embodiment, the hydroxylphenyl-terminated polysiloxane of the above chemical formula 1-1 may be a reaction product of a polysiloxane of the following chemical formula 3-1 and a compound of the following chemical formula 4:

[Chemical formula 3-1]

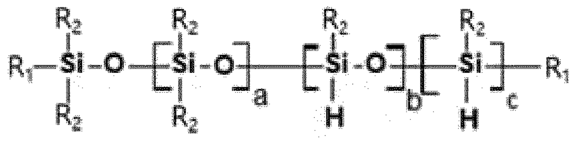

In the above chemical formula 3-1, $R_1$, $R_2$, a, b and c are the same as defined in the above chemical formula 1-1.

[Chemical formula 4]

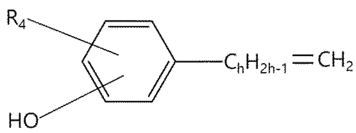

In the above chemical formula 4, $R_4$ is the same as defined in the above chemical formula 1-1; and h represents an integer of 1 to 7.

For use in preparing a hydroxylphenyl-terminated polysiloxane of chemical formula 1-1, it is preferable to maintain the molar ratio of a compound of chemical formula 3-1 to a compound of chemical formula 4 in a range of 1:4 to 1:1, and more preferably 1:3 to 1:2. If the molar ratio of a compound of chemical formula 3-1 to a compound of chemical formula 4 is out of the above range, it affects the polymerization degree of the polysiloxane and polycarbonate, and thus may be a factor of deterioration of the flame retardancy and transparency.

In an embodiment, the hydroxylphenyl-terminated polysiloxane of the above chemical formula 1-2 may be a reaction product of a polysiloxane of the following chemical formula 3-2 and a compound of the above chemical formula 4:

[Chemical formula 3-2]

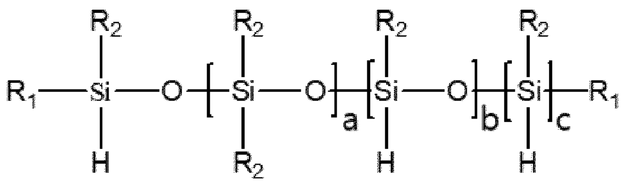

In the above chemical formula 3-2, $R_1$, $R_2$, a, b and c are the same as defined in the above chemical formula 1-2.

For use in preparing a hydroxylphenyl-terminated polysiloxane of chemical formula 1-2, it is preferable to maintain the molar ratio of a compound of chemical formula 3-2 to a compound of chemical formula 4 in a range of 1:4 to 1:1, and more preferably 1:3 to 1:2. If the molar ratio of a compound of chemical formula 3-2 to a compound of chemical formula

formula 4 is out of the above range, it affects the polymerization degree of the polysiloxane and polycarbonate, and thus may be a factor of deterioration of the flame retardancy and transparency.

**Polysiloxane-polycarbonate copolymer**

The polysiloxane-polycarbonate copolymer according to the present invention is a copolymer comprising, as repeating units, a hydroxylphenyl-terminated polysiloxane of the above chemical formula 1-1 or the above chemical formula 1-2 (that is, a polysiloxane block comprising silane unit having hydroxylphenyl group at the end and siloxanes optionally comprising hydroxylphenyl group in the middle of the chain) and a polycarbonate block.

In an embodiment, the polycarbonate block may have a structure represented by the following chemical formula 2:

[Chemical formula 2]

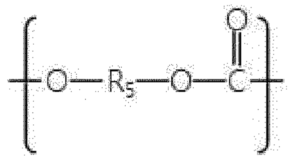

In the above chemical formula 2, $R_5$ represents aromatic hydrocarbon group having 6 to 30 carbon atoms which is unsubstituted or substituted with one or more substituents selected from the group consisting of alkyl group (e.g., alkyl group having 1 to 20 carbon atoms, or 1 to 13 carbon atoms), cycloalkyl group (e.g., cycloalkyl group having 3 to 6 carbon atoms), alkenyl group (e.g., alkenyl group having 2 to 20 carbon atoms, or 2 to 13 carbon atoms), alkoxy group (e.g., alkoxy group having 1 to 20 carbon atoms, or 1 to 13 carbon atoms), halogen atom (e.g., Cl or Br), and nitro group. In the above, for example, the aromatic hydrocarbon group may be derived from a compound of the following chemical formula 5:

[Chemical formula 5]

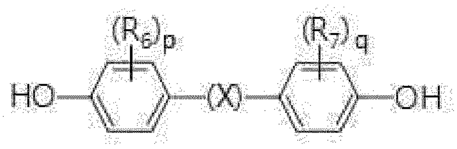

In the above chemical formula 5,

X represents linear, branched or cyclic alkylene group having no functional group; or linear, branched or cyclic alkylene group comprising at least one functional group selected from the group consisting of sulfide group, ether group, sulfoxide group, sulfone group, ketone group, naphthyl group, or isobutylphenyl group (e.g., linear alkylene group having 1 to 10 carbon atoms, or branched or cyclic alkylene group having 3 to 10 carbon atoms),

each of $R_6$ and $R_7$ independently represents halogen atom (e.g., Cl or Br), or linear, branched or cyclic alkyl group (e.g., linear alkyl group having 1 to 10 carbon atoms, or branched or cyclic alkyl group having 3 to 10 carbon atoms), and

each of p and q independently represents an integer of 0 to 4.

The compound of the above chemical formula 5 may be, for example, bis(4-hydroxyphenyl)methane, bis(4-hydroxyphenyl)phenylmethane, bis(4-hydroxyphenyl)naphthylmethane, bis(4-hydroxyphenyl)-(4-isobutylphenyl)methane, 1,1-bis(4-hydroxyphenyl)ethane, 1-ethyl-1,1-bis(4-hydroxyphenyl)propane, 1-phenyl-1,1-bis(4-hydroxyphenyl)ethane, 1-naphthyl-1,1-bis(4-hydroxyphenyl)ethane, 1,2-bis(4-hydroxyphenyl)ethane, 1,10-bis(4-hydroxyphenyl)decane, 2-methyl-1,1-bis(4-hydroxyphenyl)propane, 2,2-bis(4-hydroxyphenyl)propane, 2,2-bis(4-hydroxyphenyl)butane, 2,2-bis(4-hydroxyphenyl)pentane, 2,2-bis(4-hydroxyphenyl)hexane, 2,2-bis(4-hydroxyphenyl)nonane, 2,2-bis(3-methyl-4-hydroxyphenyl)propane, 2,2-bis(3-fluoro-4-hydroxyphenyl)propane, 4-methyl-2,2-bis(4-hydroxyphenyl)pentane, 4,4-bis(4-hydroxyphenyl)heptane, diphenyl-bis(4-hydroxyphenyl)methane, resorcinol, hydroquinone, 4,4'-dihydroxyphenyl ether[bis(4-hydroxyphenyl)ether], 4,4'-dihydroxy-2,5-dihydroxydiphenyl ether, 4,4'-dihydroxy-3,3'-dichlorodiphenyl ether, bis(3,5-dimethyl-4-hydroxyphenyl)ether, bis(3,5-dichloro-4-hydroxyphenyl)ether, 1,4-dihydroxy-2,5-dichlorobenzene, 1,4-dihydroxy-3-methylbenzene, 4,4'-dihydroxydiphenol[p,p'-dihydroxyphenyl], 3,3'-dichloro-4,4'-dihydroxyphenyl, 1,1-bis(4-hydroxyphenyl)cyclohexane, 1,1-bis(3,5-dimethyl-4-hydroxyphenyl)cyclohexane, 1,1-bis(3,5-dichloro-4-hydroxyphenyl)cyclohexane, 1,1-bis(3,5-dimethyl-4-hydroxyphenyl)cyclododecane, 1,1-bis(4-hydroxyphenyl)cyclododecane, 1,1-bis(4-hydroxyphenyl)butane, 1,1-bis(4-hydroxyphenyl)decane, 1,4-bis(4-hydroxyphenyl)propane, 1,4-bis(4-hydroxyphenyl)butane, 1,4-bis(4-hydroxyphenyl)isobutane, 2,2-bis(4-hydroxyphenyl)butane, 2,2-bis(3-chloro-4-hydroxyphenyl)propane, bis(3,5-dimethyl-4-hydroxyphenyl)methane, bis(3,5-dichloro-4-hydroxyphenyl)methane, 2,2-bis(3,5-dimethyl-4-hydroxyphenyl)propane, 2,2-bis(3,5-dibromo-4-hydroxyphenyl)propane, 2,2-bis(3,5-dichloro-4-hydroxyphenyl)propane, 2,4-bis(4-hydroxyphenyl)-2-methyl-butane, 4,4'-thiodiphenol[bis(4-hydroxyphenyl)sulfone], bis(3,5-dimethyl-4-hydroxyphenyl)sulfone, bis(3-chloro-4-hydroxyphenyl)sulfone, bis(4-hydroxyphenyl)sulfide, bis(4-hydroxyphenyl)sulfoxide, bis(3-methyl-4-hydroxyphenyl)sulfide, bis(3,5-dimethyl-4-hydroxyphenyl)sulfide, bis(3,5-dibromo-4-hydroxyphenyl)sulfoxide, 4,4'-dihydroxybenzophenone, 3,3',5,5'-tetramethyl-4,4'-dihydroxybenzophenone, 4,4'-dihydroxy diphenyl, methylhydroquinone, 1,5-dihydroxynaphthalene, or 2,6-dihydroxynaphthalene, but it is not limited thereto. Among them, the representative one is 2,2-bis(4-hydroxyphenyl)propane (bisphenol A). For other functional dihydric phenols, US Patent Nos. 2,999,835, 3,028,365, 3,153,008 and 3,334,154 may be referred to. The above dihydric phenol may be used alone or in combination of two or more of them.

Carbonate precursor, for example, carbonyl chloride (phosgene), carbonyl bromide, bis halo formate, diphenylcarbonate or dimethylcarbonate, etc. may be used as another monomer of the polycarbonate block.

In an embodiment, the amount of the hydroxylphenyl-terminated polysiloxane of the above chemical formula 1-1 or the above chemical formula 1-2 in the polysiloxane-polycarbonate copolymer of the present invention is 0.2 to 24% by weight, concretely 0.5 to 20% by weight, more concretely 1 to 15% by weight, and still more concretely 2 to 10% by weight, based on the total weight of the copolymer, and the amount of the polycarbonate is 76 to 99.8% by weight, concretely 80 to 99.5% by weight, more concretely 85 to 99% by weight, and still more concretely 90 to 98% by weight, based on the total weight of the copolymer. If the amount of the hydroxylphenyl-terminated polysiloxane of chemical formula 1-1 or chemical formula 1-2 in the polysiloxane-polycarbonate copolymer of the present invention is less than 0.2% by weight, the flame retardancy may deteriorate, and if its amount is greater than 24% by weight, the transparency deteriorates and even the flame retardancy may deteriorate.

In an embodiment, the polysiloxane-polycarbonate copolymer according to the present invention has a viscosity average molecular weight (Mv) of 15,000 to 200,000, more concretely 15,000 to 100,000, and still more concretely 20,000 to 80,000. If the viscosity average molecular weight of the polysiloxane-polycarbonate copolymer is less than 15,000, the mechanical properties may deteriorate seriously, and if its viscosity average molecular weight is greater than 200,000, there may be a problem in the processing of resin due to the increase of melting viscosity.

The polysiloxane-polycarbonate copolymer according to the present invention may be prepared through a method for preparing a polysiloxane-polycarbonate copolymer comprising the steps of: (1) reacting a hydroxylphenyl-terminated polysiloxane represented by the above chemical formula 1-1 or the above chemical formula 1-2 and an oligomeric polycarbonate under an interfacial reaction condition, which consists of aqueous alkaline solution and organic phase, to form a polysiloxane-polycarbonate intermediate; and (2) polymerizing the intermediate by using a first polymerization catalyst.

In a preferable embodiment, the step (1) of forming the polysiloxane-polycarbonate intermediate may comprise a step of mixing a hydroxylphenyl-terminated polysiloxane represented by the above chemical formula 1-1 or the above chemical formula 1-2 and an oligomeric polycarbonate in a weight ratio of 0.2 : 99.8 to 24 : 76 (preferably 0.5 : 99.5 to 20 : 80, more preferably 1 : 99 to 15 : 85, and most preferably 2 : 98 to 10 : 90). If the mixing ratio of the hydroxylphenyl-terminated polysiloxane represented by the above chemical formula 1-1 or the above chemical formula 1-2 is less than 0.2, the flame retardancy may deteriorate, and if its mixing ratio is greater than 24, the transparency deteriorates and even the flame retardancy may deteriorate.

The oligomeric polycarbonate used in the preparation of the polysiloxane-polycarbonate copolymer according to the present invention may be an oligomeric polycarbonate having a viscosity average molecular weight of 800 to 20,000 (more preferably 1,000 to 15,000). If the viscosity average molecular weight of the oligomeric polycarbonate is less than 800, the molecular weight distribution may broaden and physical properties may deteriorate, and if its viscosity average molecular weight is greater than 20,000, the reactivity may be lowered.

In an embodiment, the oligomeric polycarbonate may be prepared by adding the above-explained dihydric phenol compound in an aqueous alkaline solution to make it in a phenol salt state, and then adding the phenol compound in a phenol salt state to dichloromethane containing injected phosgene gas for reaction. To prepare the oligomer, it is preferable to maintain the molar ratio of phosgene to dihydric phenol compound (e.g., bisphenol A) within a range of about 1 : 1 to 1.5 : 1, and more preferably about 1 : 1 to 1.2 : 1. If the molar ratio of phosgene to dihydric phenol compound (e.g., bisphenol A) is less than 1, the reactivity may be lowered, and if the molar ratio of phosgene to dihydric phenol compound (e.g., bisphenol A) is greater than 1.5, the molecular weight increases excessively and thus the processability may be problematic.

The above reaction of forming an oligomer may generally be conducted at a temperature range of about 15 to

60°C. In order to adjust the pH of the reaction mixture, alkali metal hydroxide (e.g., sodium hydroxide) may be used.

In an embodiment, the step (1) of forming the polysiloxane-polycarbonate intermediate comprises a step of forming a mixture comprising the hydroxylphenyl-terminated polysiloxane represented by the above chemical formula 1-1 or the above chemical formula 1-2 and the oligomeric polycarbonate, wherein the mixture may further comprise a phase transfer catalyst, a molecular weight-controlling agent and a second polymerization catalyst. In addition, the step (1) of forming the polysiloxane-polycarbonate intermediate may comprise a step of forming a mixture comprising the hydroxylphenyl-terminated polysiloxane represented by the above chemical formula 1-1 or the above chemical formula 1-2 and the oligomeric polycarbonate; and after completion of the reaction of the hydroxylphenyl-terminated polysiloxane represented by the above chemical formula 1-1 or the above chemical formula 1-2 and the oligomeric polycarbonate, a step of extracting an organic phase from the resulting mixture, and the step (2) of polymerizing the polysiloxane-polycarbonate intermediate may comprise a step of providing the first polymerization catalyst to the extracted organic phase.

Concretely, the polysiloxane-polycarbonate copolymer according to the present invention may be prepared by adding the hydroxylphenyl-terminated polysiloxane represented by the above chemical formula 1-1 or the above chemical formula 1-2 to a mixture of organic phase-aqueous phase containing the oligomeric polycarbonate, and subsequently feeding a molecular weight-controlling agent and a catalyst.

As the molecular weight-controlling agent, a monofunctional compound similar to a monomer used in preparation of polycarbonate may be used. The monofunctional compound may be, for example, a derivative based on phenol such as p-isopropylphenol, p-tert-butylphenol (PTBP), p-cumylphenol, p-isooctylphenol and p-isononylphenol, or an aliphatic alcohol. Preferably, p-tert-butylphenol (PTBP) may be used.

As the catalyst, a polymerization catalyst and/or a phase transfer catalyst may be used. The polymerization catalyst may be, for example, triethylamine (TEA), and the phase transfer catalyst may be a compound of the following chemical formula 6:

[Chemical formula 6] $(R_8)_4Q^+X^-$

In the above chemical formula 6, $R_8$ represents alkyl group having 1 to 10 carbon atoms; Q represents nitrogen or phosphorus; and X represents halogen atom or $-OR_9$, wherein $R_9$ represents hydrogen atom, alkyl group having 1 to 18 carbon atoms or aryl group having 6 to 18 carbon atoms.

Concretely, the phase transfer catalyst may be, for example, $[CH_3(CH_2)_3]_4NX$, $[CH_3(CH_2)_3]_4PX$, $[CH_3(CH_2)_5]_4NX$, $[CH_3(CH_2)_6]_4NX$, $[CH_3(CH_2)_4]_4NX$, $CH_3[CH_3(CH_2)_3]_3NX$ or $CH_3[CH_3(CH_2)_2]_3NX$, wherein X represents Cl, Br or $-OR_9$ where $R_9$ represents hydrogen atom, alkyl group having 1 to 18 carbon atoms or aryl group having 6 to 18 carbon atoms.

The amount of the phase transfer catalyst is preferably about 0.01 to 10% by weight based on the total weight of the mixture of the hydroxylphenyl-terminated polysiloxane represented by the above chemical formula 1-1 or the above chemical formula 1-2 and the oligomeric polycarbonate. If the amount of the phase transfer catalyst is less than 0.01% by weight, the reactivity may be lowered, and if its amount is greater than 10% by weight, the phase transfer catalyst may be precipitated or the transparency may deteriorate.

In an embodiment, after the polysiloxane-polycarbonate copolymer is prepared, the organic phase dispersed in methylene chloride is washed with alkali and then separated. Subsequently, the organic phase is washed with 0.1 N solution of hydrochloric acid and then rinsed with distilled water 2 or 3 times. After rinsing is completed, the concentration of the organic phase dispersed in methylene chloride is adjusted constantly and granulation is conducted by using a constant amount of pure water at a temperature ranging from 70 to 80°C. If the temperature of the pure water is lower than 70°C, the granulation rate is low and thus the granulation time may be too long. If the temperature of the pure water is higher than 80°C, it may be difficult to obtain the polycarbonate in uniformly sized morphology. After granulation is completed, it is preferable to dry the product at 100 to 110°C for 5 to 10 hours first, and then at 110 to 120°C for 5 to 10 hours.

The polysiloxane-polycarbonate copolymer according to the present invention can secure good flame retardancy even without addition of flame-retarding agent while soundly maintaining good inherent properties of polycarbonate such as impact resistance (in particular, impact strength at low temperature) and transparency, etc., and thus it can be applied in various uses such as construction materials, automotive parts and electric/electronic parts, etc.

Therefore, according to another aspect of the present invention, a molded article comprising the polysiloxane-polycarbonate copolymer of the present invention can be provided.

There is no special limitation in a method for producing a molded article by processing the polysiloxane-polycarbonate copolymer of the present invention, and a method generally used in plastic molding (for example, extrusion, injection, etc.) may be employed as it is or with proper modification to produce the molded article.

The present invention is explained in more detail through the following Examples. However, the scope of the present invention is not limited thereby in any manner.

**[EXAMPLES]**

**<Preparation of polysiloxane>**

Example A1: Preparation of polysiloxane of chemical formula E1

In a 500 mL three-necked flask equipped with a condenser, under nitrogen atmosphere 72.64g (0.1 mole) of a polysiloxane corresponding to the above chemical formula 3-1 (APSP318, Miwon Commercial Co., Ltd., a colorless transparent liquid with a viscosity of 5cP) was dissolved in 100ml of toluene, and then 0.007g (100ppm) of platinum (Pt) catalyst (Pt-CS-1.8CS, UMICORE) was added thereto. In a state of heating the resulting solution, 26.80g (0.2 mole) of 2-allylphenol was slowly added thereto for 1 hour, and the resulting solution was refluxed for 5 hours. After the reaction was completed, the toluene solvent was removed from the solution, and the product was dried in a vacuum oven for 24 hours to prepare the polysiloxane of the following chemical formula E1:

[Chemical formula E1]

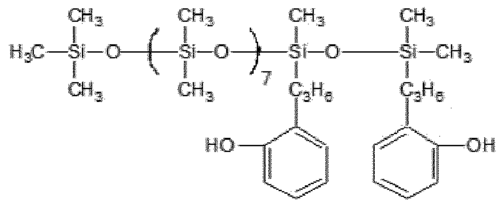

Example A2: Preparation of polysiloxane of chemical formula E2

In a 500 mL three-necked flask equipped with a condenser, under nitrogen atmosphere 71.18g (0.1 mole) of a polysiloxane corresponding to the above chemical formula 3-1 (APSP319, Miwon Commercial Co., Ltd., a colorless transparent liquid with a viscosity of 5cP) was dissolved in 100ml of toluene, and then 0.007g (100ppm) of platinum (Pt) catalyst (Pt-CS-1.8CS, UMICORE) was added thereto. In a state of heating the resulting solution, 40.30g (0.3 mole) of 2-allylphenol was slowly added thereto for 1 hour, and the resulting solution was refluxed for 5 hours. After the reaction was completed, the toluene solvent was removed from the solution, and the product was dried in a vacuum oven for 24 hours to prepare the polysiloxane of the following chemical formula E2:

[Chemical formula E2]

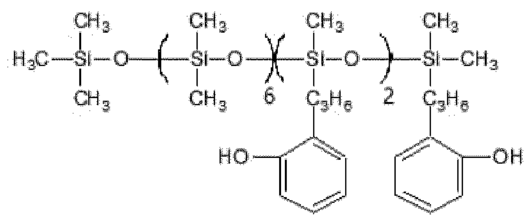

Comparative Example A1: Preparation of polysiloxane of chemical formula C1

In a 500 mL three-necked flask equipped with a condenser, under nitrogen atmosphere 49.04g (0.1 mole) of a polysiloxane (F5032, Dami Polychem, a colorless transparent liquid with a viscosity of 5cP) was dissolved in 50ml of toluene, and then 0.008g (100ppm) of platinum (Pt) catalyst (CP101, Dami Polychem) was added thereto. In a state of heating the resulting solution, 40.2g (0.3 mole) of 2-allylphenol was slowly added thereto for 1 hour, and the resulting solution was refluxed for 5 hours. After the reaction was completed, the toluene solvent was removed from the solution, and the product was dried in a vacuum oven for 24 hours to prepare the polysiloxane of the following chemical formula C1:

[Chemical formula C1]

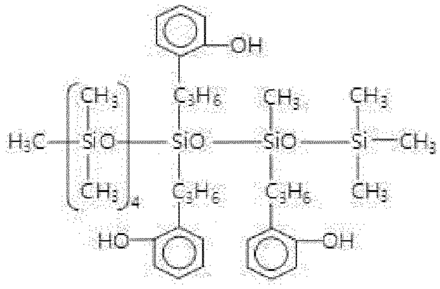

**<Preparation of polysiloxane-polycarbonate copolymer>**

Example B1: Preparation of polysiloxane-polycarbonate copolymer by using polysiloxane of Example A1 (Amount: 2% by weight)

An interfacial reaction of bisphenol A in an aqueous solution and phosgene gas was conducted in the presence of methylene chloride to prepare an oligomeric polycarbonate mixture having a viscosity average molecular weight of about 1,000. An organic phase was extracted from the obtained oligomeric polycarbonate mixture, and thereto an aqueous solution of sodium hydroxide, the polysiloxane of the above chemical formula E1 obtained in Example A1 (in amount of 2% by weight based on the total weight of the copolymer), tetrabutyl ammonium chloride (TBACl, in amount of 0.1% by weight based on the total weight of the copolymer), methylene chloride and p-tert-butylphenol (PTBP, in amount of 0.4% by weight based on the total weight of the copolymer) were admixed and reacted for 2 hours. After the phase separation, only the organic phase was collected, and thereto an aqueous solution of sodium hydroxide, methylene chloride and triethylamine (TEA, in amount of 0.015% by weight based on the total weight of the copolymer) were added and reacted for 3 hours. To the reacted organic phase, triethylamine (TEA, in amount of 0.02% by weight based on the total weight of the copolymer) was further added and reacted for additional 2 hours. After the phase separation, the organic phase with increased viscosity was collected, and thereto distilled water and methylene chloride were added, and the organic phase was washed with alkali and separated again. Next, the resulting organic phase was washed with 0.1N hydrochloric acid solution and then rinsed with distilled water 2 to 3 times. After the rinsing was completed, the organic phase was granulated by using a constant amount of pure water at 76°C. After the granulation was completed, the product was dried first at 110°C for 8 hours and then at 120°C for 10 hours, to prepare a polysiloxane-polycarbonate copolymer. The properties of the prepared polysiloxane-polycarbonate copolymer were measured and are shown in the following Table 1.

Example B2: Preparation of polysiloxane-polycarbonate copolymer by using polysiloxane of Example A2 (Amount: 2% by weight)

A polysiloxane-polycarbonate copolymer was prepared by the same method as described in Example B1, except that the polysiloxane of the above chemical formula E2 obtained in Example A2 (in amount of 2% by weight based on the total weight of the copolymer) was used instead of the polysiloxane of the above chemical formula E1 obtained in Example A1. The properties of the prepared polysiloxane-polycarbonate copolymer were measured and are shown in the following Table 1.

Example B3: Preparation of polysiloxane-polycarbonate copolymer by using polysiloxane of Example A1 (Amount: 5% by weight)

A polysiloxane-polycarbonate copolymer was prepared by the same method as described in Example B1, except that the polysiloxane of the above chemical formula E1 obtained in Example A1 was used in amount of 5% by weight based on the total weight of the copolymer. The properties of the prepared polysiloxane-polycarbonate copolymer were measured and are shown in the following Table 1.

Example B4: Preparation of polysiloxane-polycarbonate copolymer by using polysiloxane of Example A1 (Amount: 7% by weight)

A polysiloxane-polycarbonate copolymer was prepared by the same method as described in Example B1,

except that the polysiloxane of the above chemical formula E1 obtained in Example A1 was used in amount of 7% by weight based on the total weight of the copolymer. The properties of the prepared polysiloxane-polycarbonate copolymer were measured and are shown in the following Table 1.

Example B5: Preparation of polysiloxane-polycarbonate copolymer by using polysiloxane of Example A1 (Amount: 10% by weight)

A polysiloxane-polycarbonate copolymer was prepared by the same method as described in Example B1, except that the polysiloxane of the above chemical formula E1 obtained in Example A1 was used in amount of 10% by weight based on the total weight of the copolymer. The properties of the prepared polysiloxane-polycarbonate copolymer were measured and are shown in the following Table 1.

Example B6: Preparation of polysiloxane-polycarbonate copolymer by using polysiloxane of Example A2 (Amount: 7% by weight)

A polysiloxane-polycarbonate copolymer was prepared by the same method as described in Example B1, except that the polysiloxane of the above chemical formula E2 obtained in Example A2 (in amount of 7% by weight based on the total weight of the copolymer) was used instead of the polysiloxane of the above chemical formula E1 obtained in Example A1. The properties of the prepared polysiloxane-polycarbonate copolymer were measured and are shown in the following Table 1.

Example B7: Preparation of polysiloxane-polycarbonate copolymer by using polysiloxane of Example A1 (Amount: 5% by weight)

A polysiloxane-polycarbonate copolymer having a viscosity average molecular weight of 70,500 g/mol was prepared by the same method as described in Example B1, except that the polysiloxane of the above chemical formula E1 obtained in Example A1 was used in amount of 5% by weight based on the total weight of the copolymer, and the amount of p-tert-butylphenol was changed to 0.2% by weight based on the total weight of the copolymer. The properties of the prepared polysiloxane-polycarbonate copolymer were measured and are shown in the following Table 1.

Example B8: Preparation of polysiloxane-polycarbonate copolymer by using polysiloxane of Example A1 (Amount: 0.5% by weight)

A polysiloxane-polycarbonate copolymer was prepared by the same method as described in Example B1, except that the polysiloxane of the above chemical formula E1 obtained in Example A1 was used in amount of 0.5% by weight based on the total weight of the copolymer, and the amount of p-tert-butylphenol was changed to 0.2% by weight based on the total weight of the copolymer. The properties of the prepared polysiloxane-polycarbonate copolymer were measured and are shown in the following Table 1.

Example B9: Preparation of polysiloxane-polycarbonate copolymer by using polysiloxane of Example A1 (Amount: 20% by weight)

A polysiloxane-polycarbonate copolymer was prepared by the same method as described in Example B1, except that the polysiloxane of the above chemical formula E1 obtained in Example A1 was used in amount of 20% by weight based on the total weight of the copolymer. The properties of the prepared polysiloxane-polycarbonate copolymer were measured and are shown in the following Table 1.

Comparative Example B1: Linear polycarbonate resin having a viscosity average molecular weight of 21,200 g/mol

The properties of a linear polycarbonate resin having a viscosity average molecular weight of 21,200 g/mol (TRIREX 3022IR, Samyang Corporation) were measured and are shown in the following Table 1.

Comparative Example B2: Linear polycarbonate resin having a viscosity average molecular weight of 70,900 g/mol

A linear polycarbonate having a viscosity average molecular weight of 70,900 g/mol was prepared by the same method as described in Example B1, except that the polysiloxane of the above chemical formula E1 obtained in Example A1 was not used. The properties of the prepared polycarbonate resin were measured and are shown in the following Table 1.

Comparative Example B3: Preparation of polysiloxane-polycarbonate copolymer by using hydroxy-terminated polysiloxane of chemical formula C2 (Amount: 9% by weight)

A polysiloxane-polycarbonate copolymer was prepared by the same method as described in Example B1, except that the hydroxy-terminated polysiloxane of the following chemical formula C2 (in amount of 9% by weight based on the total weight of the copolymer) was used instead of the polysiloxane of the above chemical formula E1 obtained in Example A1. The properties of the prepared polysiloxane-polycarbonate copolymer were measured and are shown in the following Table 1.

[Chemical formula C2]

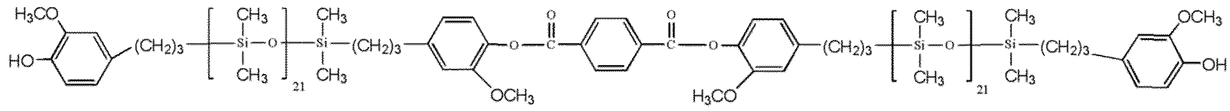

Comparative Example B4: Preparation of polysiloxane-polycarbonate copolymer by using polysiloxane of Comparative Example A1 (Amount: 7% by weight)

A polysiloxane-polycarbonate copolymer was prepared by the same method as described in Example B1, except that the polysiloxane of the above chemical formula C1 obtained in Comparative Example A1 (in amount of 7% by weight based on the total weight of the copolymer) was used instead of the polysiloxane of the above chemical formula E1 obtained in Example A1. The properties of the prepared polysiloxane-polycarbonate copolymer were measured and are shown in the following Table 1.

**<Methods for measuring properties>**

(1) H-NMR (nuclear magnetic resonance spectroscopy)

The measurement was conducted by using Avance DRX 300 (Bruker). The copolymer was confirmed by H-NMR analysis wherein the peak of methyl group of dimethylsiloxane was observed at 0.2 ppm, the peak of methylene group of the joint of polysiloxane-polycarbonate was observed at 2.6 ppm, and the peak of methoxy group of the joint of polysiloxane-polycarbonate was observed at 3.9 ppm.

(2) Viscosity average molecular weight ($M_V$: g/mol)

The viscosity of methylene chloride solution was measured by using an Ubbelohde Viscometer at 20°C, and the limiting viscosity [η] therefrom was calculated according to the following equation.

$$[\eta] = 1.23 \times 10^{-5} M_V^{0.83}$$

(3) Transmittance (%)

The transmittance was measured by using a haze meter (HAZE-GARD PLUS, BYK GARDNER).

(4) Flame retardancy

Flame retardancy was measured according to UL-94 flame retardancy test method (UL: Underwriter's Laboratory Inc., US). The test evaluates flame retardancy from flame time or drips of flaming particles after burning on a vertically fixed specimen of a certain size for 10 seconds. Flame time is the time that the test specimen continued to flame after removal from the ignition source. Ignition of cotton layer was determined through the ignition of the cotton layer set about 300 mm under the specimen by any drips of flaming particles from the specimen.

Flame retardancy ratings are shown in the the following table.

| Rating | V2 | V1 | V0 |
|---|---|---|---|
| 1st/2nd flame time of each specimen | 30 sec or less | 30 sec or less | 10 sec or less |
| Total flame time of 5 specimens | 250 sec or less | 250 sec or less | 50 sec or less |
| Ignition of cotton layer by drips | Yes | No | No |

[Table 1]

| Properties | | Examples | | | | | | | | |
|---|---|---|---|---|---|---|---|---|---|---|
| | | B1 | B2 | B3 | B4 | B5 | B6 | B7 | B8 | B9 |
| Polysiloxane | Kind | Examples | | | | | | | | |
| | | A1 | A2 | A1 | A1 | A1 | A2 | A1 | A1 | A1 |
| | Amount (wt%) | 2 | 2 | 5 | 7 | 10 | 7 | 5 | 0.5 | 20 |
| Viscosity average molecular weight (g/mol) | | 22,100 | 24,500 | 22,300 | 22,500 | 22,600 | 27,000 | 70,500 | 70,000 | 68,000 |
| Transmittance (%) | | 90 | 90 | 89 | 89 | 88 | 89 | 89 | 90 | 87 |
| UL 94 flame retardancy for each thickness | 1.5mm | V0 | | | | | | | | |
| | 1.0mm | V1 | V0 | V1 | V1 | V0 | V0 | V0 | V1 | V0 |
| Total flame time for each thickness (sec)[1)] | 1.5mm | 45 | 35 | 42 | 40 | 40 | 20 | 22 | 48 | 30 |
| | 1.0mm | 60 | 45 | 59 | 70 | 72 | 28 | 30 | 70 | 38 |
| Ignition of cotton layer by drips | 1.5mm | No | | | | | | | | |
| | 1.0mm | No | | | | | | | | |
| 1) Shorter total flame time (sec) means better flame retardancy. | | | | | | | | | | |

[Table 1] (continued)

| Properties | | Comparative Examples | | | |
|---|---|---|---|---|---|
| | | B1 | B2 | B3 | B4 |
| Polysiloxane | Kind | -[2] | -[2] | C2 | C1 |
| | Amount (wt%) | - | - | 9 | 7 |
| Viscosity average molecular weight (g/mol) | | 21,200 | 70,900 | 21,200 | 27,800 |
| Transmittance (%) | | 90 | 90 | 86 | 88 |
| UL 94 flame retardancy for each thickness | 1.5mm | V2 | V2 | V2 | V0 |
| | 1.0mm | V2 | V2 | V2 | V1 |
| Total flame time for each thickness (sec)[1] | 1.5mm | 250 | 250 | 124 | 47 |
| | 1.0mm | 250 | 250 | 250 | 88 |
| Ignition of cotton layer by drips | 1.5mm | Yes | | | No |
| | 1.0mm | Yes | | | No |

1) Shorter total flame time (sec) means better flame retardancy.
2) Polymers of Comparative Examples B 1 and B2 do not comprise polysiloxane repeating unit.

As shown in the above Table 1, it can be known that, as compared with the linear polycarbonates of Comparative Examples B1 and B2 and the polysiloxane-polycarbonate copolymers prepared in Comparative Examples B3 and B4, the polysiloxane-polycarbonate copolymers prepared in Examples B1 to B9 according to the present invention showed remarkably superior flame retardancy (relatively shorter total flame time of 5 specimens) and excellent transmittance at the same time.

## Claims

1. A hydroxylphenyl-terminated polysiloxane represented by the following chemical formula 1-1 or the following chemical formula 1-2:

[Chemical formula 1-1]

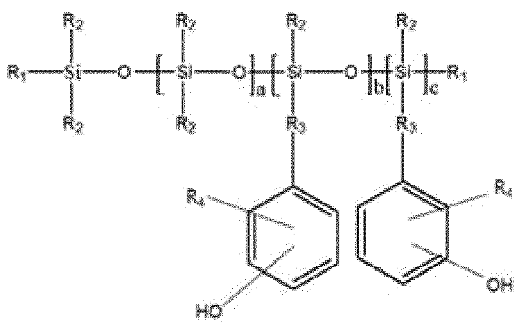

[Chemical formula 1-2]

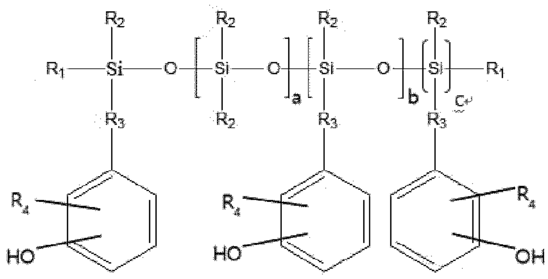

wherein: in the above chemical formulas 1-1 and 1-2,
each $R_1$ independently represents hydrogen atom, a hydrocarbon group having 1 to 13 carbon atoms or hydroxy group;
each $R_2$ independently represents a hydrocarbon group having 1 to 13 carbon atoms or hydroxy group;
each $R_3$ independently represents an alkylene group having 2 to 8 carbon atoms;
each $R_4$ independently represents hydrogen atom, halogen atom, hydroxy group, an alkyl group having 1 to 20 carbon atoms, an alkoxy group having 1 to 20 carbon atoms, or an aryl group having 6 to 10 carbon atoms;
each of a and b independently represents an integer of 0 to 10, provided that at least one of a and b is not 0; and
c represents an integer of 1 to 2.

**2.** The polysiloxane of claim 1, wherein the hydroxylphenyl-terminated polysiloxane of chemical formula 1-1 is a reaction product of a polysiloxane of the following chemical formula 3-1 and a compound of the following chemical formula 4:

[Chemical formula 3-1]

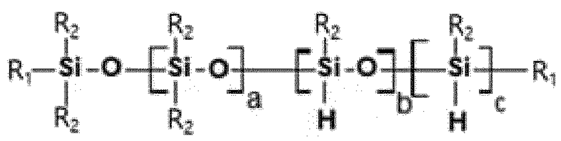

wherein: in the above chemical formula 3-1, $R_1$, $R_2$, a, b and c are the same as defined in chemical formula 1-1 of claim 1;

[Chemical formula 4]

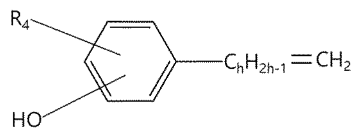

wherein: in the above chemical formula 4, $R_4$ is the same as defined in chemical formula 1-1 of claim 1, and h represents an integer of 1 to 7.

**3.** The polysiloxane of claim 1, wherein the hydroxylphenyl-terminated polysiloxane of chemical formula 1-2 is a reaction product of a polysiloxane of the following chemical formula 3-2 and a compound of the following chemical formula 4:

[Chemical formula 3-2]

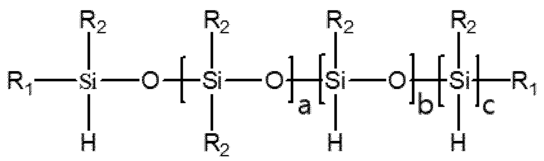

wherein: in the above chemical formula 3-2, $R_1$, $R_2$, a, b and c are the same as defined in chemical formula 1-2 of claim 1;

[Chemical formula 4]

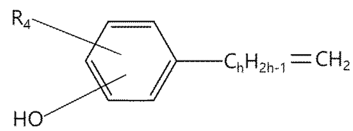

wherein: in the above chemical formula 4, $R_4$ is the same as defined in chemical formula 1-2 of claim 1, and h represents an integer of 1 to 7.

**4.** A polysiloxane-polycarbonate copolymer comprising, as repeating units, a hydroxylphenyl-terminated polysiloxane represented by the following chemical formula 1-1 or the following chemical formula 1-2; and a polycarbonate block:

[Chemical formula 1-1]

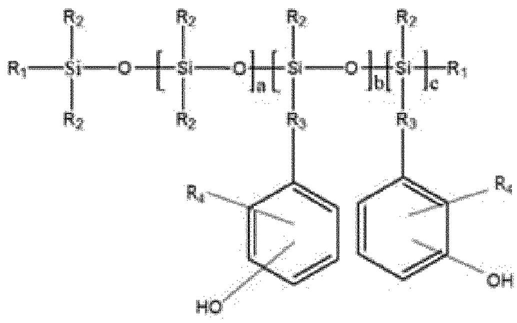

[Chemical formula 1-2]

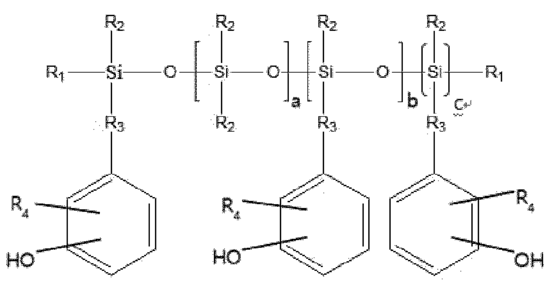

wherein: in the above chemical formulas 1-1 and 1-2,
each $R_1$ independently represents hydrogen atom, a hydrocarbon group having 1 to 13 carbon atoms or hydroxy group;
each $R_2$ independently represents a hydrocarbon group having 1 to 13 carbon atoms or hydroxy group;
each $R_3$ independently represents an alkylene group having 2 to 8 carbon atoms;
each $R_4$ independently represents hydrogen atom, halogen atom, hydroxy group, an alkyl group having 1 to 20

carbon atoms, an alkoxy group having 1 to 20 carbon atoms, or an aryl group having 6 to 10 carbon atoms; each of a and b independently represents an integer of 0 to 10, provided that at least one of a and b is not 0; and c represents an integer of 1 to 2.

5. The polysiloxane-polycarbonate copolymer of claim 4, wherein the hydroxylphenyl-terminated polysiloxane of chemical formula 1-1 is a reaction product of a polysiloxane of the following chemical formula 3-1 and a compound of the following chemical formula 4:

[Chemical formula 3-1]

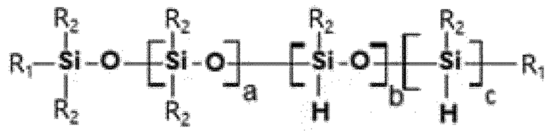

wherein: in the above chemical formula 3-1, $R_1$, $R_2$, a, b and c are the same as defined in chemical formula 1-1 of claim 4;

[Chemical formula 4]

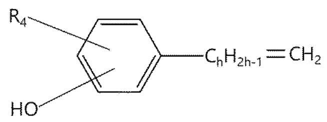

wherein: in the above chemical formula 4, $R_4$ is the same as defined in chemical formula 1-1 of claim 4, and h represents an integer of 1 to 7.

6. The polysiloxane-polycarbonate copolymer of claim 4, wherein the hydroxylphenyl-terminated polysiloxane of chemical formula 1-2 is a reaction product of a polysiloxane of the following chemical formula 3-2 and a compound of the following chemical formula 4:

[Chemical formula 3-2]

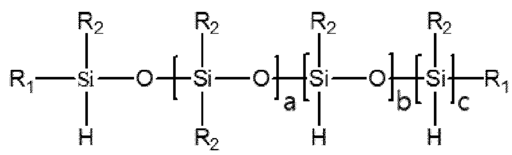

wherein: in the above chemical formula 3-2, $R_1$, $R_2$, a, b and c are the same as defined in chemical formula 1-2 of claim 4;

[Chemical formula 4]

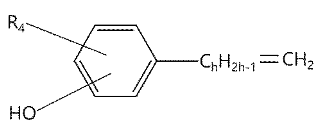

wherein: in the above chemical formula 4, $R_4$ is the same as defined in chemical formula 1-2 of claim 4, and h represents an integer of 1 to 7.

7. The polysiloxane-polycarbonate copolymer of claim 4, wherein the polycarbonate block has a structure represented

by the following chemical formula 2:

[Chemical formula 2]

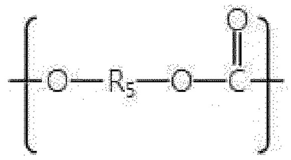

wherein: in the above chemical formula 2,
$R_5$ represents aromatic hydrocarbon group having 6 to 30 carbon atoms which is unsubstituted or substituted with one or more substituents selected from the group consisting of alkyl group, cycloalkyl group, alkenyl group, alkoxy group, halogen atom, and nitro group.

**8.** The polysiloxane-polycarbonate copolymer of claim 7, wherein the aromatic hydrocarbon group is derived from a compound of the following chemical formula 5:

[Chemical formula 5]

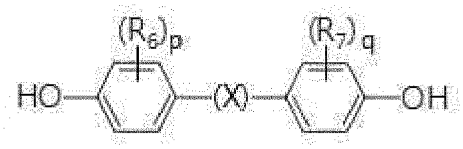

wherein: in the above chemical formula 5,
X represents linear, branched or cyclic alkylene group having no functional group; or linear, branched or cyclic alkylene group comprising at least one functional group selected from the group consisting of sulfide group, ether group, sulfoxide group, sulfone group, ketone group, naphthyl group, or isobutylphenyl group,
each of $R_6$ and $R_7$ independently represents halogen atom, or linear, branched or cyclic alkyl group, and
p and q independently represent an integer of 0 to 4.

**9.** The polysiloxane-polycarbonate copolymer of claim 4, wherein the amount of the hydroxylphenyl-terminated polysiloxane of chemical formula 1-1 or chemical formula 1-2 is 0.2 to 24% by weight, based on the total weight of the copolymer.

**10.** The polysiloxane-polycarbonate copolymer of claim 4, which has a viscosity average molecular weight of 15,000 to 200,000.

**11.** A method for preparing a polysiloxane-polycarbonate copolymer, comprising the steps of:

(1) reacting a hydroxylphenyl-terminated polysiloxane represented by the following chemical formula 1-1 or the following chemical formula 1-2 and an oligomeric polycarbonate under an interfacial reaction condition to form a polysiloxane-polycarbonate intermediate; and
(2) polymerizing the intermediate by using a first polymerization catalyst:

[Chemical formula 1-1]

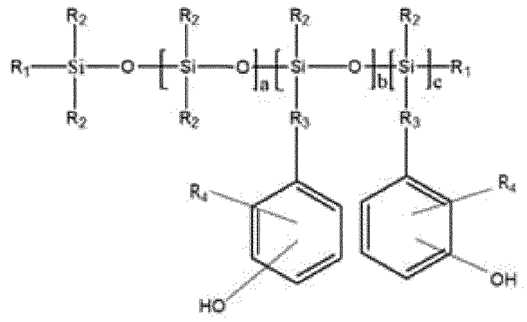

[Chemical formula 1-2]

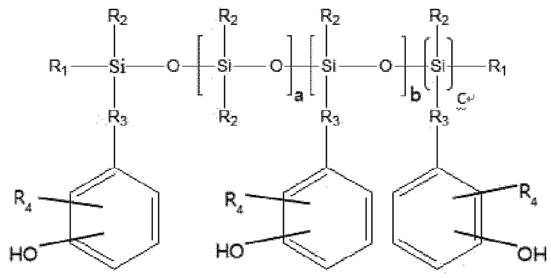

wherein: in the above chemical formulas 1-1 and 1-2,

each $R_1$ independently represents hydrogen atom, a hydrocarbon group having 1 to 13 carbon atoms or hydroxy group;

each $R_2$ independently represents a hydrocarbon group having 1 to 13 carbon atoms or hydroxy group;

each $R_3$ independently represents an alkylene group having 2 to 8 carbon atoms;

each $R_4$ independently represents hydrogen atom, halogen atom, hydroxy group, an alkyl group having 1 to 20 carbon atoms, an alkoxy group having 1 to 20 carbon atoms, or an aryl group having 6 to 10 carbon atoms;

each of a and b independently represents an integer of 0 to 10, provided that at least one of a and b is not 0; and

c represents an integer of 1 to 2.

**12.** The method for preparing a polysiloxane-polycarbonate copolymer of claim 11, wherein the step (1) of forming the polysiloxane-polycarbonate intermediate comprises a step of mixing the hydroxylphenyl-terminated polysiloxane represented by chemical formula 1-1 or chemical formula 1-2 and the oligomeric polycarbonate in a weight ratio of 0.2 : 99.8 to 24 : 76.

**13.** The method for preparing a polysiloxane-polycarbonate copolymer of claim 11, wherein the step (1) of forming the polysiloxane-polycarbonate intermediate comprises a step of forming a mixture comprising the hydroxylphenyl-terminated polysiloxane represented by chemical formula 1-1 or chemical formula 1-2 and the oligomeric polycarbonate, wherein the mixture further comprises a phase transfer catalyst, a molecular weight-controlling agent and a second polymerization catalyst.

**14.** The method for preparing a polysiloxane-polycarbonate copolymer of claim 11, wherein the step (1) of forming the polysiloxane-polycarbonate intermediate comprises a step of forming a mixture comprising the hydroxylphenyl-terminated polysiloxane represented by chemical formula 1-1 or chemical formula 1-2 and the oligomeric polycarbonate; and after completion of the reaction of the hydroxylphenyl-terminated polysiloxane represented by chemical formula 1-1 or chemical formula 1-2 and the oligomeric polycarbonate, a step of extracting an organic phase from the resulting mixture; and the step (2) of polymerizing the polysiloxane-polycarbonate intermediate comprises a step of providing the first polymerization catalyst to the extracted organic phase.

**15.** The method for preparing a polysiloxane-polycarbonate copolymer of claim 11, wherein the oligomeric polycarbonate

has a viscosity average molecular weight of 800 to 20,000.

**16.** A molded article comprising the polysiloxane-polycarbonate copolymer according to any one of claims 4 to 10.

**INTERNATIONAL SEARCH REPORT**

International application No.
**PCT/KR2022/009597**

**A. CLASSIFICATION OF SUBJECT MATTER**

**C08G 77/04**(2006.01)i; **C08G 77/00**(2006.01)i; **C08G 77/448**(2006.01)i; **C08G 64/18**(2006.01)i

According to International Patent Classification (IPC) or to both national classification and IPC

**B. FIELDS SEARCHED**

Minimum documentation searched (classification system followed by classification symbols)

C08G 77/04(2006.01); C07F 19/00(2006.01); C07F 7/08(2006.01); C07F 7/18(2006.01); C08G 59/62(2006.01); C08G 64/04(2006.01); C08G 77/50(2006.01); C08L 69/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus), Google & keywords: 히드록시페닐 말단 폴리실록산(hydroxyphenyl terminated polysiloxane), 알릴페놀(allylphenol), 촉매(catalyst), 상전이(phase transition), 분자량조절제(molecular weight regulator), 유기상(oil-phase), 추출(extraction)

**C. DOCUMENTS CONSIDERED TO BE RELEVANT**

| Category* | Citation of document, with indication, where appropriate, of the relevant passages | Relevant to claim No. |
|---|---|---|
| X | JP 2011-089050 A (MITSUBISHI GAS CHEMICAL CO. INC.) 06 May 2011 (2011-05-06)<br>See claims 1, 13 and 14; and paragraphs [0055]-[0059] and [0075]-[0082]. | 1,3,4,6-13,15,16 |
| Y | | 14 |
| A | | 2,5 |
| X | JP 10-182832 A (TORAY DOW CORNING SILICONE CO., LTD. et al.) 07 July 1998 (1998-07-07)<br>See claims 1, 2 and 6; and paragraphs [0043], [0088], [0103], [0104], [0111]-[0113], [0120], [0121], [0126] and [0127]. | 1,2,4,5,7-12,15,16 |
| Y | | 14 |
| X | JP 07-033859 A (MATSUSHITA ELECTRIC WORKS LTD.) 03 February 1995 (1995-02-03)<br>See paragraphs [0006]-[0014]. | 1-3 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **30 September 2022** | **05 October 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

International application No.
**PCT/KR2022/009597**

### C. DOCUMENTS CONSIDERED TO BE RELEVANT

| Category* | Citation of document, with indication, where appropriate, of the relevant passages | Relevant to claim No. |
|---|---|---|
| Y | KR 10-2013-0045799 A (DAMIPOLYCHEM CO., LTD. et al.) 06 May 2013 (2013-05-06) See claims 7-9. | 14 |
| X<br>Y | US 6001929 A (NODERA A. et al.) 14 December 1999 (1999-12-14) See columns 6-8; and claims 1-5. | 1,3,4,6-12,15,16<br>14 |

Form PCT/ISA/210 (second sheet) (July 2022)

**INTERNATIONAL SEARCH REPORT**
**Information on patent family members**

International application No.
**PCT/KR2022/009597**

| Patent document cited in search report | Publication date (day/month/year) | Patent family member(s) | Publication date (day/month/year) |
|---|---|---|---|
| JP 2011-089050 A | 06 May 2011 | None | |
| JP 10-182832 A | 07 July 1998 | DE 69815227 T2 | 29 April 2004 |
| | | EP 0896975 A1 | 17 February 1999 |
| | | EP 0896975 B1 | 04 June 2003 |
| | | EP 1288242 A2 | 05 March 2003 |
| | | EP 1288242 A3 | 19 March 2003 |
| | | JP 10-232503 A | 02 September 1998 |
| | | JP 3730349 B2 | 05 January 2006 |
| | | JP 3902281 B2 | 04 April 2007 |
| | | US 6136521 A | 24 October 2000 |
| | | WO 98-37120 A1 | 27 August 1998 |
| JP 07-033859 A | 03 February 1995 | None | |
| KR 10-2013-0045799 A | 06 May 2013 | KR 10-1400348 B1 | 27 May 2014 |
| US 6001929 A | 14 December 1999 | CN 1123291 A | 29 May 1996 |
| | | EP 0692522 A2 | 17 January 1996 |
| | | JP 08-081620 A | 26 March 1996 |
| | | JP 3037588 B2 | 24 April 2000 |
| | | KR 10-0366266 B1 | 23 April 2003 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 101841684
- US 2999835 A
- US 3028365 A
- US 3153008 A
- US 3334154 A